# EUROPÄISCHE PATENTSCHRIFT

(11) **EP 3 708 432 B1**
(45) Veröffentlichungstag und Bekanntmachung des Hinweises auf die Patenterteilung: **04.05.2022**
(21) Anmeldenummer: 20160888.2
(22) Anmeldetag: 04.03.2020
(51) Int. Cl.: B60R 11/02

(54) **VORRICHTUNG UND VERFAHREN ZUM EINSTELLEN EINER BILDSCHIRMANORDNUNG FÜR EIN FAHRZEUGDACH UND FAHRZEUGDACH FÜR EIN KRAFTFAHRZEUG**
VEHICLE ROOF FOR A MOTOR VEHICLE AND DEVICE AND METHOD FOR ADJUSTING A DISPLAY ASSEMBLY FOR A VEHICLE ROOF
DISPOSITIF ET PROCÉDÉ DE RÉGLAGE D'UN AGENCEMENT D'ÉCRAN POUR UN TOIT DE VÉHICULE ET TOIT DE VÉHICULE POUR UN VÉHICULE AUTOMOBILE

(30) Priorität: 15.03.2019 DE 102019106668; 12.07.2019 DE 102019118998
(43) Veröffentlichungstag der Anmeldung: 16.09.2020
(73) Patentinhaber: Webasto SE, 82131 Stockdorf (DE)
(72) Erfinder: Eger, Klaus, 84367 Reut (DE)
(74) Vertreter: Epping - Hermann - Fischer

(56) Entgegenhaltungen:
- EP-A1- 2 873 563
- DE-A1-102012 008 581
- DE-A1-102015 117 934
- JP-A- 2017 114 287

## Beschreibung

Die Erfindung betrifft eine Vorrichtung und ein Verfahren zum Einstellen einer Bildschirmanordnung für ein Fahrzeugdach. Die Erfindung betrifft weiter ein Fahrzeugdach für ein Kraftfahrzeug mit einer solchen Vorrichtung.

Einige Kraftfahrzeuge weisen eine Bildschirmanordnung auf, die auf Wunsch ein Unterhaltungsprogramm bereitstellen kann und zu einem erhöhten Komfort des Kraftfahrzeugs beiträgt. Gegebenenfalls ist eine solche Bildschirmanordnung mit einem Kinematikkonzept versehen, welches bei Bedarf ein Ein- und Ausklappen der Bildschirmanordnung ermöglicht. Dabei ist es eine Herausforderung eine platzsparende und kostengünstige Anordnung einer solchen Unterhaltungselektronik zu ermöglichen.

EP 3 683 097 A1 offenbart eine Vorrichtung mit den Merkmalen des Oberbegriffs des Anspruchs 1 sowie ein Verfahren mit den Merkmalen des Oberbegriffs des Anspruchs 9.

Der Erfindung liegt die Aufgabe zugrunde, eine Vorrichtung und ein Verfahren zum Einstellen einer Bildschirmanordnung für ein Fahrzeugdach zu schaffen, die jeweils ein zuverlässiges und sicheres Ausbilden einer gewünschten Einstellung der Bildschirmanordnung ermöglichen und zudem zu einem kostengünstigen und komfortablen Kraftfahrzeug beitragen können.

Die Aufgabe wird durch die Merkmale der unabhängigen Patentansprüche gelöst. Vorteilhafte Ausgestaltungen sind in den jeweiligen abhängigen Patentansprüchen angegeben.

Eine erfindungsgemäße Vorrichtung zum Einstellen einer Bildschirmanordnung für ein Fahrzeugdach umfasst einen Hauptgleiter und einen Verstellgleiter. Der Hauptgleiter ist mit der Bildschirmanordnung koppelbar und ist zum Auf- und Einschwenken und zum Verfahren der Bildschirmanordnung ausgebildet. Der Verstellgleiter ist mit der Bildschirmanordnung koppelbar und ist zum Einstellen eines vorgegebenen Ausrichtungswinkels der Bildschirmanordnung ausgebildet. Der Hauptgleiter ist mittels eines ersten Antriebskabels und der Verstellgleiter ist mittels eines zweiten Antriebskabels in einer Führungsschiene antreibbar gelagert. Die Vorrichtung weist ferner ein Antriebskopplungselement auf, das das Antriebskabel des Hauptgleiters und das Antriebskabel des Verstellgleiters miteinander koppelt, sodass der Hauptgleiter und der Verstellgleiter hinsichtlich eines gemeinsamen Bezugspunkts zumindest abschnittsweise mit unterschiedlichen Bewegungsgeschwindigkeiten verfahrbar sind. Der Hauptgleiter, der Verstellgleiter und das Antriebskopplungselement sind ferner so eingerichtet, dass unabhängig von einer Position der Bildschirmanordnung, die mittels des Hauptgleiters eingestellt ist, bezogen auf eine Längsachse der Vorrichtung ein Abstand zwischen dem Hauptgleiter und dem Verstellgleiter und dadurch ein Ausrichtungswinkel der Bildschirmanordnung mittels des Verstellgleiters vorgegeben einstellbar ist.

Mittels der beschriebenen Vorrichtung ist ein komfortables und zuverlässiges Einstellen einer gewünschten Position und Ausrichtung einer Bildschirmanordnung möglich, welche zudem kostengünstig realisierbar und platzsparend in den Aufbau eines Fahrzeugdachs für ein Kraftfahrzeug integrierbar ist.

Gemäß der Erfindung ist das Antriebskopplungselement als ein Zahnrad ausgebildet, das mit dem Verstellgleiter gekoppelt ist und das im Eingriff mit dem Antriebskabel des Hauptgleiters und mit dem Antriebskabel des Verstellgleiters ist. Das Zahnrad ermöglicht eine besonders einfache und kostengünstige Kopplung der Antriebe. Alternativ kann das Zahnrad an dem Hauptgleiter angeordnet sein und mittels der Antriebskabel eine Kopplung zwischen dem Verstellgleiter und dem Hauptgleiter ausbilden. Alternativ oder zusätzlich kann eine Kopplung der Antriebe durch Hebelmechaniken und/oder ein Getriebe eingerichtet sein, um den Hauptgleiter und den Verstellgleiter gezielt anzusteuern und die Bildschirmanordnung wie gewünscht auszurichten.

Das Zahnrad ist hinsichtlich seiner Verzahnung zum Beispiel so ausgestaltet, dass eine vorgegebene Bewegungsgeschwindigkeit des Verstellgleiters eingerichtet ist, die zumindest abschnittsweise halb so groß ist wie eine Antriebsgeschwindigkeit der Antriebskabel. Die Antriebskabel sind zum Beispiel als spiralförmige Kabel ausgeführt, in die die Verzahnung des Zahnrads eingreifen kann.

Die Antriebskabel können auch als Steigungskabel bezeichnet werden. Der Hauptgleiter und der Verstellgleiter sind beispielsweise Lineargleiter, die bei einem Ausrichten der Bildschirmanordnung in einem vorgesehenen Kanal der Führungsschiene geführt werden. Das Zahnrad ermöglicht als Antriebskopplungselement eine gezielt eingerichtete Geschwindigkeitsreduzierung eines Lineargleiters durch Koppelung der Steigungskabelantriebe.

Gemäß einer weiteren bevorzugten Weiterbildung umfasst die Vorrichtung eine Hebelanordnung, die den Hauptgleiter und den Verstellgleiter lösbar miteinander koppelt. Die Hebelanordnung weist zwei Schwenkhebel und einen Kopplungshebel auf, die jeweils relativ zueinander verschwenbar miteinander gekoppelt sind. Einer der Schwenkhebel ist mit dem Verstellgleiter gekoppelt. Der Kopplungshebel ist mit dem Hauptgleiter lösbar gekoppelt, sodass der Kopplungshebel in einem ersten, eingeklappten Zustand der Bildschirmanordnung mit dem Hauptgleiter gekoppelt ist und in einem zweiten, ausgeklappten Zustand der Bildschirmanordnung von dem Hauptgleiter entkoppelt ist. Der Kopplungshebel ist zum Beispiel U-förmig oder zangenförmig ausgebildet und umgreift in dem ersten, eingeklappten Zustand der Bildschirmanordnung einen Kopplungsstift an dem Hauptgleiter.

Der Hauptgleiter und der Verstellgleiter sind in einem eingebauten Zustand der Vorrichtung auch mittels der Bildschirmanordnung miteinander gekoppelt. Die beschriebene lösbare Kopplung, die mittels der Hebelanordnung ausgebildet ist, realisiert eine Art Drehfalle an der Bildschirmanordnung mit einer Übertotpunktkinematik, die ab einer gewissen Ausrichtung die Kopplung freigibt.

Gemäß einer bevorzugten Weiterbildung umfasst die Vorrichtung eine erste und eine zweite Antriebseinheit. Die erste Antriebseinheit ist mit dem ersten Antriebskabel bzw. dem Antriebskabel des Hauptgleiters gekoppelt und die zweite Antriebseinheit ist mit dem zweiten Antriebskabel bzw. dem Antriebskabel des Verstellgleiters gekoppelt. Die erste und/oder die zweite Antriebseinheit weisen insbesondere einen Elektromotor auf.

Mittels der beschriebenen Vorrichtung ist eine elektrisch betätigbare Mechanik zum Schwenken und Verfahren einer Bildschirmanordnung realisierbar, welche ein bequemes Absenken, Ausrichten und Einstellen eines Displays in einem Fahrzeuginnenraum ermöglicht. Das Fahrzeugdach weist beispielsweise einen verschiebbaren Deckel auf. Das Fahrzeugdach ist beispielsweise ein Dach für ein Cabriolet.

Mittels des Hauptgleiters und der mit dieser koppelbaren ersten Antriebseinheit kann die Bildschirmanordnung kontrolliert und zuverlässig ein- und ausgeschwenkt und verfahren werden, um eine gewünschte Schwenk- oder HubPosition der Bildschirmanordnung auszubilden. Mittels des Verstellgleiters und der mit dieser koppelbaren zweiten Antriebseinheit kann unabhängig von der Schwenk- oder HubPosition der Bildschirmanordnung, eine Winkelausrichtung verändert und die Bildschirmanordnung zur angenehmeren Betrachtung ausgerichtet werden.

Die beschriebene Vorrichtung weist einen besonders übersichtlichen Aufbau mit einer geringen Anzahl an Komponenten auf und kann kostengünstig und platzsparend realisiert werden. Ein Bauraumbedarf in einem Fahrzeuginnenraum kann somit gering gehalten werden. Die Vorrichtung kann insbesondere in einem Fahrzeugdach integriert sein oder an einem solchen angeordnet sein und dennoch eine komfortable Kopfbewegungsfreiheit in dem Fahrzeuginnenraum ermöglichen. Auf diese Weise kann zu einer hochwertigen Unterhaltungsmöglichkeit in einem Kraftfahrzeug beigetragen werden.

Die beschriebene Vorrichtung ermöglicht es, komplexe Hebelmechaniken einzusparen und ein Spiel einer Kulissensteuerung eines Hebels zum Ausklappen der Bildschirmanordnung zu reduzieren. Mittels der Vorrichtung können ungünstige Hebelverhältnisse vermieden oder zumindest reduziert werden.

Insbesondere in Ausgestaltung des Antriebskopplungselements in Form eines Zahnradantriebs ermöglicht die beschriebene Vorrichtung eine langsamere Bildschirmbewegung bei gleicher Öffnungsbewegung des Fahrzeugdaches. Eine Neigung des Bildschirms wird durch den Abstand zwischen dem Hauptgleiter und dem Verstellgleiter bestimmt. Der Hauptgleiter ist bevorzugt direkt mit einem Steigungskabel bzw. dem ersten Antriebskabel angetrieben. An dem Verstellgleiter ist das Zahnrad gelagert, welches im Eingriff mit dem Steigungskabel zum Antrieb des Hauptgleiters und einem weiteren Steigungskabel zum Antrieb des Zahnrades ist. Der Verstellgleiter mit dem Zahnrad bewegt sich zum Beispiel mit der halben Geschwindigkeit der Steigungskabel. Dadurch verändert sich die Neigung der Bildschirmanordnung mit einer geringeren Geschwindigkeit und die Einstellung kann genauer erfolgen.

Ein vorhandenes Spiel in den Steigungs- bzw. Antriebskabeln wirkt sich wesentlich geringer auf den Abstand der Gleiter zueinander und damit auf die Neigung der Bildschirmanordnung aus, als wenn beide Gleiter direkt von den Steigungskabeln angetrieben werden. Somit können nutzbringende Hebelverhältnisse realisiert werden.

Ein erfindungsgemäßes Fahrzeugdach umfasst zwei Führungsschienen, die in Bezug auf eine Längsachse des Fahrzeugdachs auf gegenüberliegenden Seiten des Fahrzeugdachs angeordnet sind. Das Fahrzeugdach umfasst weiter eine Ausgestaltung der zuvor beschriebenen Vorrichtung zum Einstellen einer Bildschirmanordnung, die mittels der Führungsschienen mit dem Fahrzeugdach gekoppelt ist. Die Vorrichtung kann insbesondere bestehende Räume innerhalb einer jeweiligen Führungsschiene nutzen, die zum Beispiel auch zum Betreiben einer Verdunkelungsvorrichtung ausgebildet sind. Insbesondere sind die beiden Gleiter innerhalb einer gemeinsamen Führungsschiene angeordnet.

In Bezug auf ein Fahrzeugdach kann die Vorrichtung insbesondere eine doppelte Anzahl der beschriebenen Komponenten umfassen, die hinsichtlich einer zentralen oder mittigen Längsachse des Fahrzeugdachs im Wesentlichen spiegelsymmetrisch ausgebildet und angeordnet sind. Das Fahrzeugdach mit der beschriebenen Vorrichtung trägt somit zu einem erhöhten Komfort eines Kraftfahrzeugs bei und ist im Vergleich zu konventionellen Kippeinrichtungen für ein Display platzsparender und kostengünstiger herstellbar. Dadurch, dass das Fahrzeugdach eine Ausgestaltung der zuvor beschriebenen Vorrichtung umfasst, sind sämtliche zuvor beschriebenen Merkmale und Eigenschaften der Vorrichtung auch für das Fahrzeugdach offenbart.

Ein erfindungsgemäßes Verfahren zum Einstellen einer Bildschirmanordnung für ein Fahrzeugdach umfasst ein Antreiben eines Hauptgleiters, der mit der Bildschirmanordnung verschwenkbar gekoppelt ist, mittels Verfahren eines ersten Antriebskabels und dadurch Schwenken der Bildschirmanordnung und Ausbilden eines ausgeklappten Zustands der Bildschirmanordnung. Das Verfahren umfasst weiter ein Antreiben eines Verstellgleiters, der mit der Bildschirmanordnung verschwenkbar gekoppelt ist, mittels Verfahren eines zweiten Antriebskabels, wobei das Antriebskabel des Hauptgleiters und das Antriebskabel des Verstellgleiters mittels eines Antriebskopplungselements miteinander koppelt sind, sodass der Hauptgleiter und der Verstellgleiter hinsichtlich eines gemeinsamen Bezugspunkts zumindest abschnittsweise mit unterschiedlichen Bewegungsgeschwindigkeiten verfahrbar sind. Somit erfolgt ein Einstellen eines vorgegebenen Abstands zwischen dem Hauptgleiter und dem Verstellgleiter bezogen auf eine Längsachse des Fahrzeugdachs und dadurch ein Einstellen eines vorgegebenen Ausrichtungswinkels der Bildschirmanordnung unabhängig von dem ausgebildeten ausgeklappten Zustand der Bildschirmanordnung.

Mittels des beschriebenen Verfahrens ist ein zuverlässiges und sicheres Ausbilden einer gewünschten Einstellung der Bildschirmanordnung möglich und es kann zudem zu einem kostengünstigen und komfortablen Kraftfahrzeug beigetragen werden. Das Verfahren ist insbesondere mittels einer Ausgestaltung der zuvor beschriebenen Vorrichtung durchführbar, sodass, sofern zutreffend, sämtliche beschriebenen Merkmale und Eigenschaften der Vorrichtung auch für das Verfahren offenbart sind und umgekehrt.

Gemäß einer Weiterbildung des Verfahrens umfasst das Antreiben des Hauptgleiters und das Antreiben des Verstellgleiters ein Ansteuern einer ersten Antriebseinheit, die mit dem Antriebskabel des Hauptgleiters gekoppelt ist, und dadurch Bewegen zumindest eines aus Hauptgleiter und Verstellgleiter. Das Verfahren umfasst ferner ein Ansteuern einer zweiten Antriebseinheit, die mit dem Antriebskabel des Verstellgleiters gekoppelt ist, und dadurch Bewegen des Verstellgleiters relativ zu dem Hauptgleiter, sodass zumindest abschnittsweise unterschiedliche Bewegungsgeschwindigkeiten des Hauptgleiters und des Verstellgleiters eingestellt sind und ein vorgegebener Abstand zwischen dem Hauptgleiter und dem Verstellgleiter ausgebildet wird.

Das Einstellen eines vorgegebenen Ausrichtungswinkels der Bildschirmanordnung umfasst insbesondere ein Antreiben eines Zahnrads, das das Antriebskopplungselement realisiert und das mit dem Verstellgleiter gekoppelt ist und im Eingriff mit dem Antriebskabel des Hauptgleiters und mit dem Antriebskabel des Verstellgleiters ist.

Ausführungsbeispiele der Erfindung sind im Folgenden anhand der schematischen Zeichnungen näher erläutert. Es zeigen:
- Figur 1: ein Kraftfahrzeug mit einem Fahrzeugdach in einer perspektivischen Ansicht,
- Figuren 2-5: ein Ausführungsbeispiel einer Vorrichtung zum Einstellen einer Bildschirmanordnung für ein Fahrzeugdach, und
- Figuren 6-11: verschiedene Ansichten eines Bewegungsablaufs der Vorrichtung beim Ausklappen und Ausrichten der Bildschirmanordnung.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit Bezugszeichen gekennzeichnet.

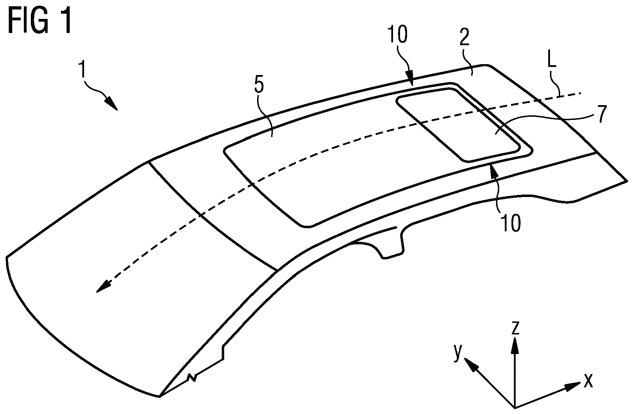

Figur 1 zeigt schematisch in einer perspektivischen Ansicht ein Kraftfahrzeug 1 mit einem Fahrzeugdach 2, das einen Deckel 5 und eine Bildschirmanordnung 7 aufweist. Der Deckel 5 ist zum Beispiel ein zum Fahrzeugdach 2 unbewegliches Festglaselement. Alternativ ist der Deckel 5 relativ zu dem Fahrzeugdach 2 beweglich, um wahlweise eine Öffnung in dem Fahrzeugdach 2 freizugeben und zu verschließen. Das Fahrzeugdach 2 kann auch keinen Deckel 5 aufweisen und eine ausnehmungsfreie Dachhaut eines falt- oder zusammenklappbaren Cabriodachs sein, welches in einem Heckbereich des Kraftfahrzeugs 1 verstaut werden kann. Darüber hinaus kann das Fahrzeugdach 2 auch mit Deckel 5 ein Cabriodach ausbilden, bei dem der Deckel 5 so ausgestaltet ist, dass ein Zusammenfalten oder Zusammenklappen ermöglicht ist.

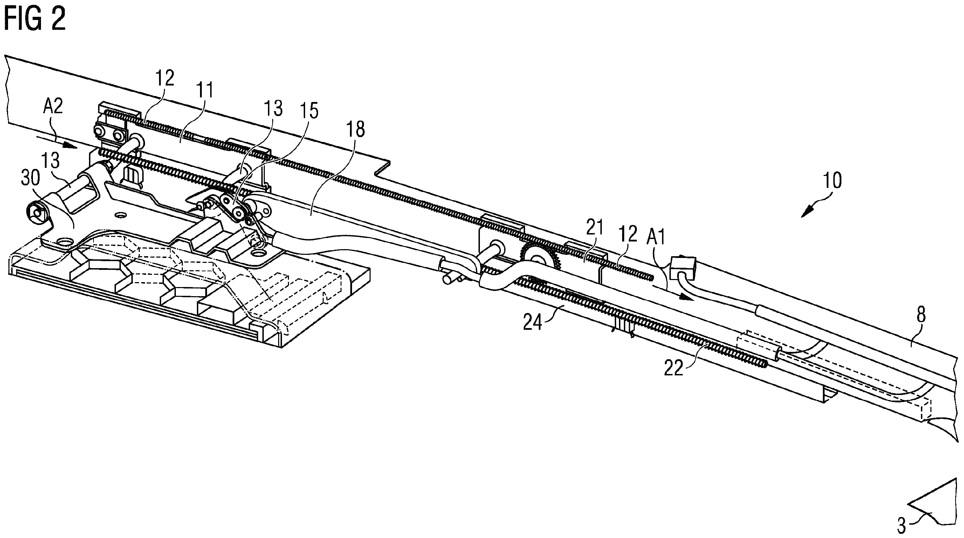

Die Figuren 2 bis 5 zeigen jeweils in perspektiven Ansichten ein Ausführungsbeispiel einer Vorrichtung 10 zum Einstellen der Bildschirmanordnung 7 für das Fahrzeugdach 2 nach Figur 1. Die Vorrichtung 10 weist einen Hauptgleiter 11 auf, der mittels eines Kopplungsstifts 13 und eines Bildschirmträgers 30 mit der Bildschirmanordnung 7 gekoppelt ist. Der Hauptgleiter 11 ist zum Auf- und Einschwenken und zum Verfahren der Bildschirmanordnung 7 ausgebildet. Die Vorrichtung 10 weist weiter einen Verstellgleiter 21 auf, der mittels eines Stützlenkers 18 mit der Bildschirmanordnung 7 gekoppelt ist. Der Verstellgleiter 21 ist zum Einstellen eines vorgegebenen Ausrichtungswinkels A der Bildschirmanordnung 7 ausgebildet ist.

Der Verstellgleiter 21 ist ferner mittels einer Hebelanordnung 15 mit einem weiteren Kopplungsstift 13 des Hauptgleiters 11 gekoppelt. Die Hebelanordnung 15 umfasst zwei Schwenkhebel 16 und einen Kopplungshebel 17, der U-förmig oder zangenförmig ausgebildet ist. Die Schwenkhebel 16 und der Kopplungshebel 17 sind jeweils relativ zueinander verschwenkbar miteinander gekoppelt und realisieren eine Art Drehfalle mit Übertotpunktkinematik an dem Bildschirmträger 30.

Der Hauptgleiter 11 ist mittels eines ersten Antriebskabels 12 und der Verstellgleiter 21 ist mittels eines zweiten Antriebskabels 22 in einer Führungsschiene 8 antreibbar gelagert. Die Führungsschiene 8 ist zum Beispiel an einem Dachrahmen 3 des Fahrzeugdachs 2 befestigt. Der geschilderte Aufbau ist insbesondere spiegelbildlich bezüglich einer Fahrzeuglängsachse L des Fahrzeugdachs 2 zu verstehen, sodass auf gegenüberliegenden Seiten des Fahrzeugdachs 2 jeweils eine Vorrichtung 10 angeordnet ist.

Die Vorrichtung 10 weist ferner ein Antriebskopplungselement 24 auf, das das Antriebskabel 12 des Hauptgleiters 11 und das Antriebskabel 22 des Verstellgleiters 21 miteinander koppelt. Das Antriebskopplungselement ist in dem illustrierten Ausführungsbeispiel als Zahnrad 24 ausgestaltet. Mittels des Zahnrads 24 sind die Antriebe für den Hauptgleiter 11 und den Verstellgleiter 21 derart gekoppelt, dass der Hauptgleiter 11 und der Verstellgleiter 21 hinsichtlich eines gemeinsamen Bezugspunkts zumindest abschnittsweise mit unterschiedlichen Bewegungsgeschwindigkeiten verfahrbar sind und dass unabhängig von einer Position der Bildschirmanordnung 7, die mittels des Hauptgleiters 11 eingestellt ist, bezogen auf eine Längsachse der Vorrichtung 10 ein Abstand D1, D2, D3 zwischen dem Hauptgleiter 11 und dem Verstellgleiter 21 und dadurch ein Ausrichtungswinkel A der Bildschirmanordnung 7 mittels des Verstellgleiters 21 vorgegeben einstellbar sind.

Das Zahnrad 24 ist mit dem Verstellgleiter 21 gekoppelt und ist im Eingriff mit dem Antriebskabel 12 des Hauptgleiters 11 und mit dem Antriebskabel 22 des Verstellgleiters 21. Alternativ kann das Zahnrad 24 an dem Hauptgleiter 11 angeordnet sein und im Eingriff mit dem Antriebskabel 12 des Hauptgleiters 11 und mit dem Antriebskabel 22 des Verstellgleiters 21 sein. Das Zahnrad 24 ist so ausgebildet, dass sich der Verstellgleiter 21 mit der halben Geschwindigkeit der Antriebskabel 12, 22 bewegt. Das erste Antriebskabel 12 ist mit dem Hauptgleiter 11 und an einer Oberseite mit dem Zahnrad 24 gekoppelt und einem Antrieb A1 des Hauptgleiters 11 zugehörig. Das zweite Antriebskabel 12 ist an einer Unterseite mit dem Zahnrad 24 gekoppelt und einem Antrieb A2 des Verstellgleiters 21 zugehörig, sodass ein gewünschter Abstand D1, D2, D3 zwischen dem Hauptgleiter 11 und dem Verstellgleiter 21 einstellbar ist.

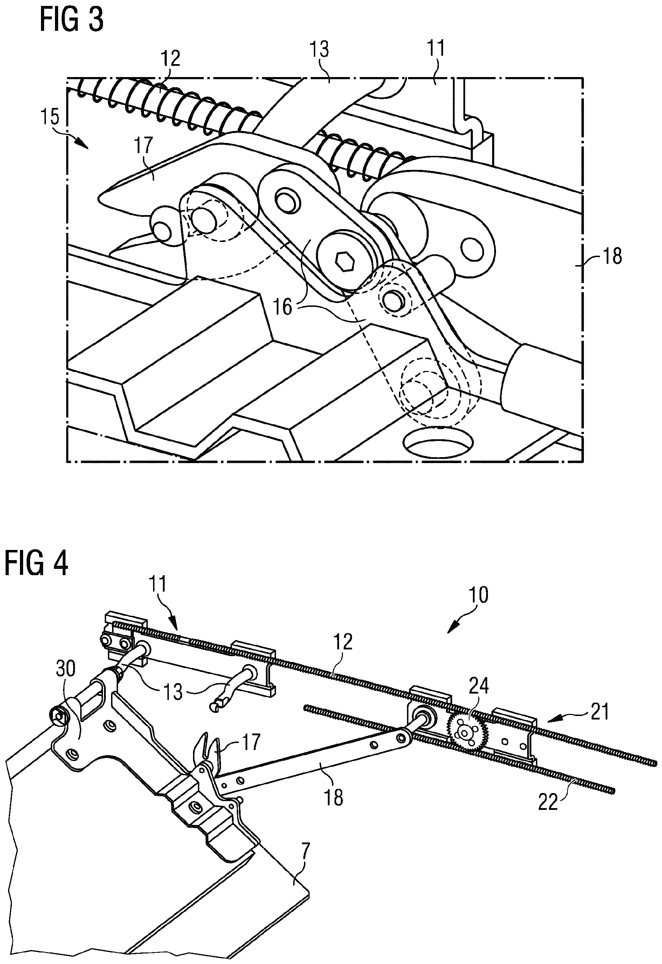

Figur 3 zeigt in einer vergrößerten Ansicht die Drehfalle, die durch die Hebelanordnung 15 realisiert ist. Einer der Schwenkhebel 16 ist mit dem Stützlenker 18 und mit dem weiteren Schwenkhebel 16 jeweils verschwenkbar gekoppelt. Der weitere Schwenkhebel 16 ist wiederum mit dem Kopplungshebel 17 verschwenkbar gekoppelt, welcher in dem eingeklappten Zustand der Bildschirmanordnung 7 einen Kopplungsstift 13 an dem Hauptgleiter 11 zangenförmig umgreift. Bei einem Ausklappen der Bildschirmanordnung 7 wird der Kopplungshebel 17 mittels des Stützlenkers 18 und der Schwenkhebel 16 vorgegeben ausgerichtet, sodass ein freies Ende des Kopplungshebels 17 nach oben zeigt und der Kopplungshebel 17 in einer weiteren Bewegung der Bildschirmanordnung 7 nach unten auskoppeln kann (s. Figuren 4 und 6 bis 7). Die Hebelanordnung 15 richtet somit eine lösbare Kopplung zwischen dem Hauptgleiter 11 und dem Verstellgleiter 21 ein.

Im Rahmen dieser Beschreibung bezeichnen Begriffe, wie "oben", "unten", "vorne", "hinten", "links", "rechts" sowie "vertikal" und "horizontal", Richtungsangaben, Ausrichtungen oder Positionen, welche sich auf einen betriebsgemäßen Einsatz der Vorrichtung 10 in einem betriebsbereiten Kraftfahrzeug 1 gemäß der Figur 1 beziehen. Die eingezeichnete Längsachse L weist zudem ein Pfeilsymbol auf, welches zur besseren Orientierung eine übliche Fahrtrichtung andeutet. Die beschriebene Bildschirmanordnung 7 ist insbesondere für Fahrzeuginsassen auf der hinteren Sitzbank vorgesehen, welche mittels der beschriebenen Vorrichtung 10 bei Bedarf einfach und komfortabel abgesenkt und ausgerichtet werden kann.

Figur 4 zeigt die Vorrichtung 10 in einer weiteren perspektivischen Ansicht, in der die Führungsschiene 8 ausgeblendet ist. Die Bildschirmanordnung 7 ist teilweise ausgeklappt und der Kopplungshebel 17 ist von dem Kopplungsstift 13 des Hauptgleiters 11 entkoppelt, indem der Hauptgleiter 11 mittels des Antriebskabels 12 angetrieben und auf den Verstellgleiter 21 zubewegt wurde.

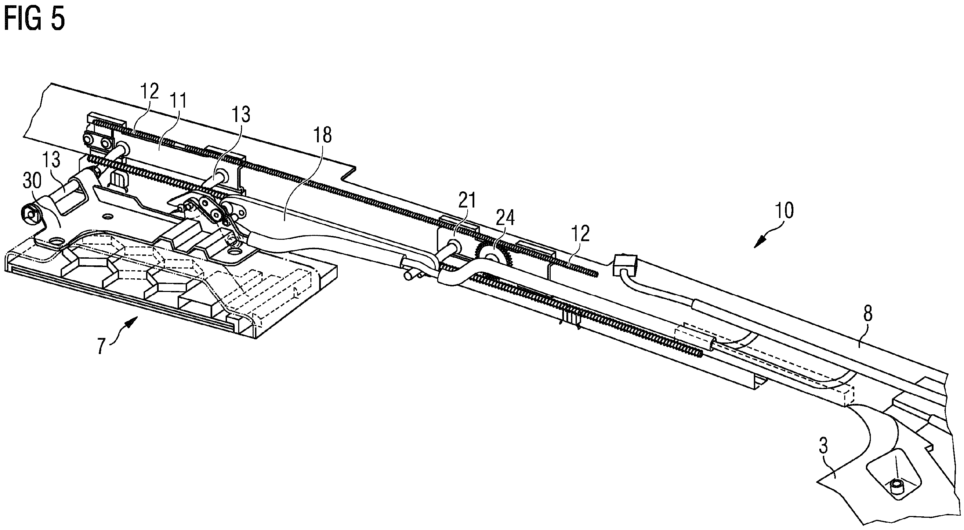

Figur 5 zeigt eine weitere perspektivische Ansicht der Vorrichtung 10 in einem eingeklappten Zustand der Bildschirmanordnung 7.

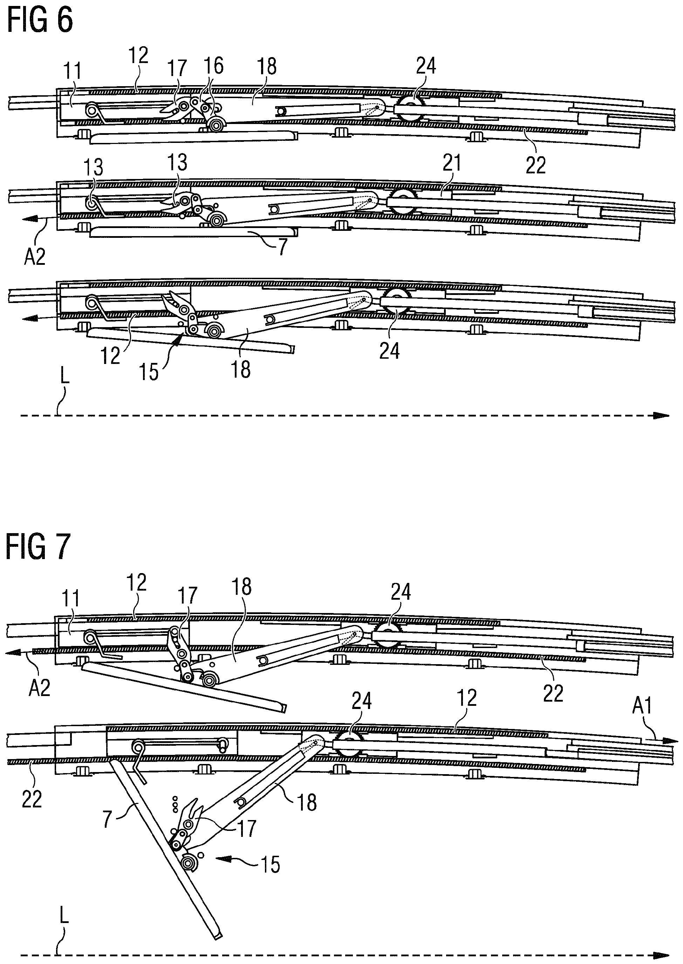

Die Figuren 6 bis 11 zeigen einen Bewegungsablauf der Komponenten der Vorrichtung 10 bei einem Ausklappen, Verschieben und Ausrichten der Bildschirmanordnung 7 in verschiedenen Betriebspositionen, welche mittels der Vorrichtung 10 zuverlässig und komfortabel eingestellt werden können.

Figur 6 illustriert in dem obersten Bild eine Ausgangslage, in der die Bildschirmanordnung 7 vollständig eingeklappt ist und ein zugehöriges Display im Wesentlichen parallel zu dem Fahrzeugdach 2 geparkt oder verstaut ist. In dem mittleren Bild der Figur 6 sind der Hauptgleiter 11 und der Verstellgleiter 21 aufeinander zubewegt worden, indem zum Beispiel der Antrieb A2 betätigt wurde. Alternativ können der Verstellgleiter 21 und der Hauptgleiter 11 mittels des Antriebs A1 und/oder mittels des Antriebs A2 aufeinander zubewegt werden.

In dem unteren Bild der Figur 6 sind die beiden Gleiter 11 und 21 noch weiter aufeinander zubewegt worden und die Bildschirmanordnung 7 ist schon ein wenig ausgeklappt. Dabei wurden der Stützlenker 18 und die durch die Hebelanordnung 15 realisierte Drehfalle ausgerichtet, sodass der klammer- oder zangenförmige Kopplungshebel 17 mit seinem freien Ende nach oben zeigt.

Die Figur 7 zeigt in zwei Bildern Positionen der Vorrichtung 10, in denen die beiden Gleiter 11 und 21 noch weiter aufeinander zubewegt wurden und die Bildschirmanordnung weiter ausgerichtet wurde. In dem unteren Bilde der Figur 7 ist zu erkennen, dass der Kopplungshebel 17 von dem Kopplungsstift 13 des Hauptgleiters 11 entkoppelt ist.

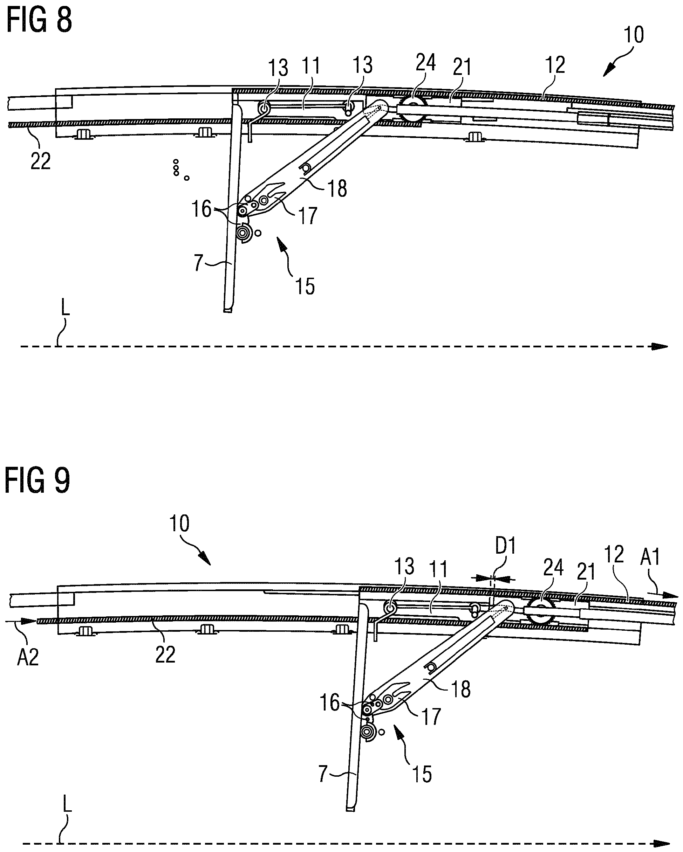

Figur 8 zeigt die Vorrichtung 10 in einem vollständig ausgeklappten Zustand der Bildschirmanordnung 7, welche sich bezogen auf die illustrierte Seitenansicht im Wesentlichen vertikal in Richtung Fahrzeuginnenraum erstreckt. Der Hauptgleiter 11 und der Verstellgleiter 21 weisen einen vorgegebenen Abstand D1, zum Beispiel null, auf und sind miteinander gekoppelt bzw. kontaktieren einander.

Figur 9 illustriert ein Verschieben der Bildschirmanordnung 7 in dem ausgeklappten Zustand, indem zum Beispiel die miteinander gekoppelten Gleiter 11 und 21 durch Betätigen der Antriebe A1 und A2 weiter in Richtung der Fahrzeugfront verschoben werden. Zwischen den beiden Gleitern 11 und 21 ist ein vorgegebener Abstand D1 eingestellt.

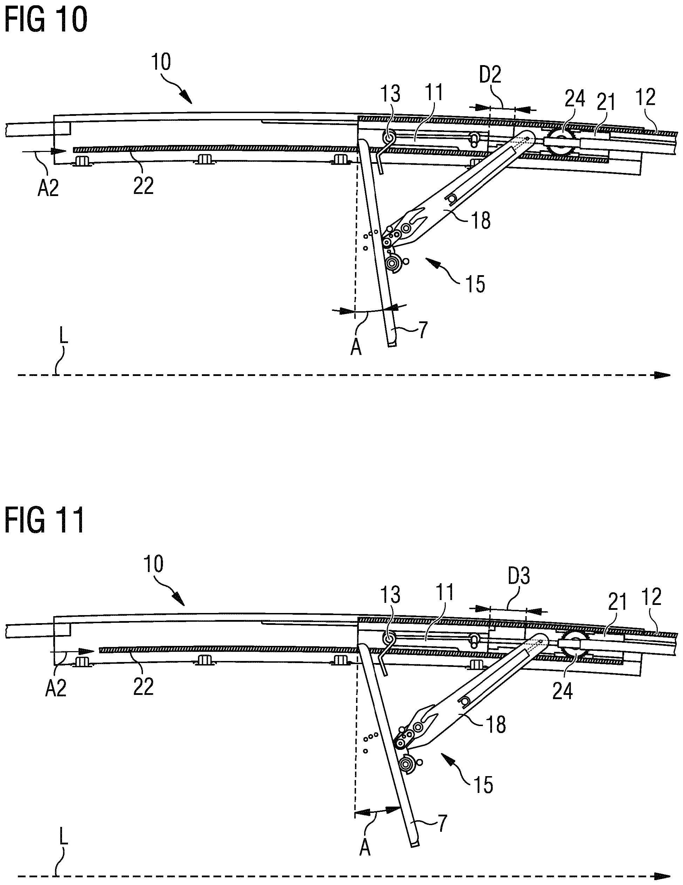

In Figur 10 ist das Einstellen eines gewünschten Ausrichtungswinkels A illustriert. Durch Betätigen des Antriebs A2 wird das Zahnrad 24 angetrieben und der daran gekoppelte Verstellgleiter 21 entfernt sich von dem Hauptgleiter 11 in Richtung der Längsachse L bzw. in Richtung Fahrzeugfront. Der zuvor vorhandene Abstand D1 wird somit auf den Abstand D2 vergrößert.

In Figur 11 ist im Vergleich zu Figur 10 das Einstellen eines noch größeren Ausrichtungswinkels A illustriert. Durch weiteres Betätigen des Antriebs A2 wird das Zahnrad 24 weiter angetrieben und der daran gekoppelte Verstellgleiter 21 entfernt sich noch weiter von dem Hauptgleiter 11 in Richtung der Fahrzeugfront. Der zuvor vorhandene Abstand D2 wird somit auf den Abstand D3 vergrößert.

Eine entsprechend inverse Bewegungsfolge kann zum Einklappen der Bildschirmanordnung 7 durchgeführt werden.

### Bezugszeichenliste

- 1: Kraftfahrzeug
- 2: Fahrzeugdach
- 3: Dachrahmen
- 5: Deckel
- 7: Bildschirmanordnung
- 8: Führungsschiene
- 10: Vorrichtung
- 11: Hauptgleiter
- 12: Antriebskabel des Hauptgleiters
- 13: Kopplungsstift des Hauptgleiters
- 15: Hebelanordnung
- 16: Schwenkhebel der Hebelanordnung
- 17: Kopplungshebel der Hebelanordnung
- 18: Stützlenker
- 21: Verstellgleiter
- 22: Antriebskabel des Verstellgleiters
- 24: Antriebskopplungselement / Zahnrad
- 30: Bildschirmträger

- A: Ausrichtungswinkel
- A1: Antrieb Hauptgleiter
- A2: Antrieb Verstellgleiter
- D1: Gleiterabstand im ausgeklappten Zustand
- D2, D3: Gleiterabstand im ausgeklappten und winkelverstellten Zustand
- L: Längsachse / Fahrtrichtung

## Patentansprüche

1. Vorrichtung (10) zum Einstellen einer Bildschirmanordnung (7) für ein Fahrzeugdach (2), umfassend:
- einen Hauptgleiter (11), der mit der Bildschirmanordnung (7) koppelbar ist und der zum Auf- und Einschwenken und zum Verfahren der Bildschirmanordnung (7) ausgebildet ist, und
- einen Verstellgleiter (21), der mit der Bildschirmanordnung (7) koppelbar ist und der zum Einstellen eines vorgegebenen Ausrichtungswinkels (A) der Bildschirmanordnung (7) ausgebildet ist,
wobei der Hauptgleiter (11) mittels eines ersten Antriebskabels (12) und der Verstellgleiter (21) mittels eines zweiten Antriebskabels (22) in einer Führungsschiene (8) antreibbar gelagert sind, **dadurch gekennzeichnet, dass** die Vorrichtung (10) ferner ein Antriebskopplungselement (24) aufweist, das als ein Zahnrad ausgebildet ist und das Antriebskabel (12) des Hauptgleiters (11) und das Antriebskabel (22) des Verstellgleiters (21) miteinander koppelt, sodass der Hauptgleiter (11) und der Verstellgleiter (21) hinsichtlich eines gemeinsamen Bezugspunkts zumindest abschnittsweise mit unterschiedlichen Bewegungsgeschwindigkeiten verfahrbar sind und unabhängig von einer Position der Bildschirmanordnung (7), die mittels des Hauptgleiters (11) eingestellt ist, bezogen auf eine Längsachse (L) der Vorrichtung (10) ein Abstand (D1, D2, D3) zwischen dem Hauptgleiter (11) und dem Verstellgleiter (21) und dadurch ein Ausrichtungswinkel (A) der Bildschirmanordnung (7) mittels des Verstellgleiters (21) vorgegeben einstellbar ist.

2. Vorrichtung (10) nach Anspruch 1, bei der das Antriebskopplungselement (24) mit dem Verstellgleiter (21) gekoppelt ist und im Eingriff mit dem Antriebskabel (12) des Hauptgleiters (11) und mit dem Antriebskabel (22) des Verstellgleiters (21) ist.

3. Vorrichtung (10) nach Anspruch 1, bei der das Antriebskopplungselement (24) mit dem Hauptgleiter (11) gekoppelt ist und im Eingriff mit dem Antriebskabel (12) des Hauptgleiters (11) und mit dem Antriebskabel (22) des Verstellgleiters (21) ist.

4. Vorrichtung (10) nach Anspruch 2 oder 3, bei der das Zahnrad (24) so ausgebildet ist, dass eine vorgegebene Bewegungsgeschwindigkeit des Verstellgleiters (21) einrichtet, die zumindest abschnittsweise halb so groß ist wie eine Antriebsgeschwindigkeit der Antriebskabel (12, 22).

5. Vorrichtung (10) nach einem der Ansprüche 1 bis 4, umfassend:
eine Hebelanordnung (15), die den Hauptgleiter (11) und den Verstellgleiter (21) lösbar miteinander koppelt,
wobei die Hebelanordnung (15) zwei Schwenkhebel (16) und einen Kopplungshebel (17) aufweist, die jeweils relativ zueinander verschwenbar miteinander gekoppelt sind,
wobei einer der Schwenkhebel (16) mit dem Verstellgleiter (21) gekoppelt ist und der Kopplungshebel (17) mit dem Hauptgleiter (11) lösbar gekoppelt ist, sodass der Kopplungshebel (17) in einem ersten, eingeklappten Zustand der Bildschirmanordnung (7) mit dem Hauptgleiter (11) gekoppelt und in einem zweiten, ausgeklappten Zustand der Bildschirmanordnung (7) von dem Hauptgleiter (11) entkoppelt ist.

6. Vorrichtung (10) nach Anspruch 5, bei der der Kopplungshebel (17) der Hebelanordnung (15) U-förmig ausgebildet ist und in dem ersten, eingeklappten Zustand der Bildschirmanordnung (7) einen Kopplungsstift (13) an dem Hauptgleiter (11) umgreift.

7. Vorrichtung (10) nach einem der Ansprüche 1 bis 6, umfassend:
- eine erste Antriebseinheit, die mit dem ersten Antriebskabel (12) gekoppelt ist, und
- eine zweite Antriebseinheit, die mit dem zweiten Antriebskabel (22) gekoppelt ist, wobei die erste und/oder die zweite Antriebseinheit einen Elektromotor aufweist.

8. Fahrzeugdach (2) für ein Kraftfahrzeug (1), umfassend:
- Führungsschienen (8), die in Bezug auf eine Längsachse (L) des Fahrzeugdachs (2) auf gegenüberliegenden Seiten des Fahrzeugdachs (2) angeordnet sind, und
- eine Vorrichtung (10) zum Einstellen einer Bildschirmanordnung (7) nach einem der Ansprüche 1 bis 7, die mittels der Führungsschienen (8) mit dem Fahrzeugdach (2) gekoppelt ist.

9. Verfahren zum Einstellen einer Bildschirmanordnung (7) für ein Fahrzeugdach (2), umfassend:
- Antreiben eines Hauptgleiters (11), der mit der Bildschirmanordnung (7) verschwenkbar gekoppelt ist, mittels Verfahren eines ersten Antriebskabels (12) und dadurch Schwenken der Bildschirmanordnung (7) und Ausbilden eines ausgeklappten Zustands der Bildschirmanordnung (7), und
- Antreiben eines Verstellgleiters (21), der mit der Bildschirmanordnung (7) verschwenkbar gekoppelt ist, mittels Verfahren eines zweiten Antriebskabels (22), **dadurch gekennzeichnet, dass** das Antriebskabel (12) des Hauptgleiters (11) und das Antriebskabel (22) des Verstellgleiters (21) mittels eines Antriebskopplungselements (24), das als Zahnrad ausgebildet ist, miteinander koppelt sind, sodass der Hauptgleiter (11) und der Verstellgleiter (21) hinsichtlich eines gemeinsamen Bezugspunkts zumindest abschnittsweise mit unterschiedlichen Bewegungsgeschwindigkeiten verfahrbar sind und dadurch Einstellen eines vorgegebenen Abstands (D1, D2, D3) zwischen dem Hauptgleiter (11) und dem Verstellgleiter (21) bezogen auf eine Längsachse (L) des Fahrzeugdachs (2) und dadurch Einstellen eines vorgegebenen Ausrichtungswinkels (A) der Bildschirmanordnung (7) unabhängig von dem ausgebildeten ausgeklappten Zustand der Bildschirmanordnung (7).

10. Verfahren nach Anspruch 9, bei dem das Antreiben des Hauptgleiters (11) und das Antreiben des Verstellgleiters (21) umfasst:
- Ansteuern einer ersten Antriebseinheit, die mit dem Antriebskabel (12) des Hauptgleiters (11) gekoppelt ist, und dadurch Bewegen zumindest eines aus Hauptgleiter (11) und Verstellgleiter (21), und
- Ansteuern einer zweiten Antriebseinheit, die mit dem Antriebskabel (22) des Verstellgleiters (21) gekoppelt ist, und dadurch Bewegen des Verstellgleiters (21) relativ zu dem Hauptgleiter (11), sodass zumindest abschnittsweise unterschiedliche Bewegungsgeschwindigkeiten des Hauptgleiters (11) und des Verstellgleiters (21) eingestellt sind.

11. Verfahren nach Anspruch 9 oder 10, bei dem das Einstellen eines vorgegebenen Ausrichtungswinkels (A) der Bildschirmanordnung (7) umfasst:
Antreiben des Zahnrads (24), das mit dem Verstellgleiter (21) oder dem Hauptgleiter (11) gekoppelt ist und das im Eingriff mit dem Antriebskabel (12) des Hauptgleiters (11) und mit dem Antriebskabel (22) des Verstellgleiters (21) ist.

## Claims

1. Apparatus (10) for adjusting a screen arrangement (7) for a vehicle roof (2), comprising:
- a main slider (11) which can be coupled to the screen arrangement (7) and is configured for pivoting the screen arrangement (7) out and in and for displacing the latter, and
- an adjusting slider (21) which can be coupled to the screen arrangement (7) and is configured for adjusting a prescribed alignment angle (A) of the screen arrangement (7),
wherein, in a guide rail (8), the main slider (11) is mounted so as to be drivable by means of a first drive cable (12) and the adjusting slider (21) is mounted so as to be drivable by means of a second drive cable (22), **characterized in that** the apparatus (10) furthermore has a drive coupling element (24) which is configured as a gear and couples the drive cable (12) of the main slider (11) and the drive cable (22) of the adjusting slider (21) to one another, such that the main slider (11) and the adjusting slider (21) can be displaced, with respect to a common reference point, at least in certain portions, at different movement speeds, and a spacing (D1, D2, D3) between the main slider (11) and the adjusting slider (21) and therefore an alignment angle (A) of the screen arrangement (7) can be adjusted in a prescribed manner by means of the adjusting slider (21), independently of a position, set by means of the main slider (11), of the screen arrangement (7) in relation to a longitudinal axis (L) of the apparatus (10).

2. Apparatus (10) according to Claim 1, in which the drive coupling element (24) is coupled to the adjusting slider (21) and engages with the drive cable (12) of the main slider (11) and with the drive cable (22) of the adjusting slider (21).

3. Apparatus (10) according to Claim 1, in which the drive coupling element (24) is coupled to the main slider (11) and engages with the drive cable (12) of the main slider (11) and with the drive cable (22) of the adjusting slider (21).

4. Apparatus (10) according to Claim 2 or 3, in which the gear (24) is configured such that a prescribed movement speed of the adjusting slider (21) is set, said speed being, at least in certain portions, half as great as a drive speed of the drive cables (12, 22).

5. Apparatus (10) according to one of Claims 1 to 4, comprising:
a lever arrangement (15) which couples the main slider (11) and the adjusting slider (21) to one another in a releasable manner, wherein the lever arrangement (15) has two pivot levers (16) and a coupling lever (17) which are each coupled to one another so as to be able to pivot relative to each other, wherein one of the pivot levers (16) is coupled to the adjusting slider (21), and the coupling lever (17) is coupled to the main slider (11) in a releasable manner, such that the coupling lever (17), in a first folded-in state of the screen arrangement (7), is coupled to the main slider (11) and, in a second folded-out state of the screen arrangement (7), is decoupled from the main slider (11).

6. Apparatus (10) according to Claim 5, in which the coupling lever (17) of the lever arrangement (15) is of U-shaped configuration and engages around a coupling pin (13) on the main slider (11) in the first folded-in state of the screen arrangement (7).

7. Apparatus (10) according to one of Claims 1 to 6, comprising:
- a first drive unit which is coupled to the first drive cable (12), and
- a second drive unit which is coupled to the second drive cable (22), wherein the first and/or the second drive unit have/has an electric motor.

8. Vehicle roof (2) for a motor vehicle (1), comprising:
- guide rails (8) which are arranged, in relation to a longitudinal axis (L) of the vehicle roof (2), on opposite sides of the vehicle roof (2), and
- an apparatus (10) for adjusting a screen arrangement (7) according to one of Claims 1 to 7, said apparatus being coupled to the vehicle roof (2) by means of the guide rails (8) .

9. Method for adjusting a screen arrangement (7) for a vehicle roof (2), comprising:
- driving a main slider (11), which is coupled to the screen arrangement (7) in a pivotable manner, by means of displacement of a first drive cable (12), and therefore pivoting the screen arrangement (7) and configuring a folded-out state of the screen arrangement (7), and
- driving an adjusting slider (21), which is coupled to the screen arrangement (7) in a pivotable manner, by means of displacement of a second drive cable (22), **characterized in that** the drive cable (12) of the main slider (11) and the drive cable (22) of the adjusting slider (21) are coupled to one another by means of a drive coupling element (24) which is configured as a gear, such that the main slider (11) and the adjusting slider (21) can be displaced, with respect to a common reference point, at least in certain portions, at different movement speeds, and therefore adjustment of a prescribed spacing (D1, D2, D3) between the main slider (11) and the adjusting slider (21) in relation to a longitudinal axis (L) of the vehicle roof (2) and therefore adjustment of a prescribed alignment angle (A) of the screen arrangement (7), independently of the configured folded-out state of the screen arrangement (7).

10. Method according to Claim 9, in which the driving of the main slider (11) and the driving of the adjusting slider (21) comprises:
- actuating a first drive unit which is coupled to the drive cable (12) of the main slider (11), and therefore moving at least one of the main slider (11) and the adjusting slider (21), and
- actuating a second drive unit which is coupled to the drive cable (22) of the adjusting slider (21), and therefore moving the adjusting slider (21) relative to the main slider (11), such that, at least in certain portions, different movement speeds are set for the main slider (11) and the adjusting slider (21).

11. Method according to Claim 9 or 10, in which the adjustment of a prescribed alignment angle (A) of the screen arrangement (7) comprises:
driving the gear (24) which is coupled to the adjusting slider (21) or the main slider (11) and which engages with the drive cable (12) of the main slider (11) and with the drive cable (22) of the adjusting slider (21).

## Revendications

1. Dispositif (10) pour le réglage d'un agencement d'écran (7) pour un toit de véhicule (2), comprenant :
- un coulisseau principal (11), qui peut être couplé à l'agencement d'écran (7) et qui est configuré pour faire pivoter vers le haut et vers l'intérieur et pour déplacer l'agencement d'écran (7), et
- un coulisseau de réglage (21), qui peut être couplé à l'agencement d'écran (7) et qui est configuré pour régler un angle d'orientation (A) prédéfini de l'agencement d'écran (7) ,
le coulisseau principal (11) étant monté de manière à pouvoir être entraîné dans un rail de guidage (8) au moyen d'un premier câble d'entraînement (12) et le coulisseau de réglage (21) au moyen d'un deuxième câble d'entraînement (22), **caractérisé en ce que** le dispositif (10) présente en outre un élément de couplage d'entraînement (24), qui est configuré sous la forme d'une roue dentée et qui couple entre eux le câble d'entraînement (12) du coulisseau principal (11) et le câble d'entraînement (22) du coulisseau de réglage (21), de telle sorte que le coulisseau principal (11) et le coulisseau de réglage (21) peuvent être déplacés par rapport à un point de référence commun, au moins par sections, à des vitesses de déplacement différentes et indépendamment d'une position de l'agencement d'écran (7), qui est réglée au moyen du coulisseau principal (11), une distance (D1, D2, D3) entre le coulisseau principal (11) et le coulisseau de réglage (21) et ainsi un angle d'orientation (A) de l'agencement d'écran (7) peuvent être réglés de manière prédéfinie au moyen du coulisseau de réglage (21) par rapport à un axe longitudinal (L) du dispositif (10).

2. Dispositif (10) selon la revendication 1, dans lequel l'élément de couplage d'entraînement (24) est couplé au coulisseau de réglage (21) et est en prise avec le câble d'entraînement (12) du coulisseau principal (11) et avec le câble d'entraînement (22) du coulisseau de réglage (21).

3. Dispositif (10) selon la revendication 1, dans lequel l'élément de couplage d'entraînement (24) est couplé au coulisseau principal (11) et est en prise avec le câble d'entraînement (12) du coulisseau principal (11) et avec le câble d'entraînement (22) du coulisseau de réglage (21).

4. Dispositif (10) selon la revendication 2 ou 3, dans lequel la roue dentée (24) est configurée pour établir une vitesse de déplacement prédéfinie du coulisseau de réglage (21) qui est, au moins par sections, la moitié d'une vitesse d'entraînement des câbles d'entraînement (12, 22).

5. Dispositif (10) selon l'une quelconque des revendications 1 à 4, comprenant :
un agencement de leviers (15), qui couple de manière amovible le coulisseau principal (11) et le coulisseau de réglage (21) l'un à l'autre, l'agencement de leviers (15) présentant deux leviers pivotants (16) et un levier de couplage (17), qui sont couplés les uns avec les autres chacun de manière pivotante les uns par rapport aux autres, l'un des leviers pivotants (16) étant couplé au coulisseau de réglage (21) et le levier de couplage (17) étant couplé de manière amovible au coulisseau principal (11), de telle sorte que le levier de couplage (17) est couplé au coulisseau principal (11) dans un premier état replié de l'agencement d'écran (7) et est découplé du coulisseau principal (11) dans un deuxième état déployé de l'agencement d'écran (7).

6. Dispositif (10) selon la revendication 5, dans lequel le levier de couplage (17) de l'agencement de leviers (15) est configuré en forme de U et, dans le premier état replié de l'agencement d'écran (7), entoure une broche de couplage (13) sur le coulisseau principal (11).

7. Dispositif (10) selon l'une quelconque des revendications 1 à 6, comprenant :
- une première unité d'entraînement, qui est couplée au premier câble d'entraînement (12), et
- une deuxième unité d'entraînement, qui est couplée au deuxième câble d'entraînement (22), la première et/ou la deuxième unité d'entraînement présentant un moteur électrique.

8. Toit de véhicule (2) pour un véhicule automobile (1), comprenant :
- des rails de guidage (8), qui sont agencés sur des côtés opposés du toit de véhicule (2) par rapport à un axe longitudinal (L) du toit de véhicule (2), et
- un dispositif (10) pour le réglage d'un agencement d'écran (7) selon l'une quelconque des revendications 1 à 7, qui est couplé au toit de véhicule (2) au moyen des rails de guidage (8).

9. Procédé pour le réglage d'un agencement d'écran (7) pour un toit de véhicule (2), comprenant :
- l'entraînement d'un coulisseau principal (11), qui est couplé de manière pivotante à l'agencement d'écran (7), au moyen du déplacement un premier câble d'entraînement (12) et ainsi le pivotement de l'agencement d'écran (7) et la formation d'un état déployé de l'agencement d'écran (7), et
- l'entraînement d'un coulisseau de réglage (21), qui est couplé de manière pivotante à l'agencement d'écran (7), au moyen du déplacement d'un deuxième câble d'entraînement (22), **caractérisé en ce que** le câble d'entraînement (12) du coulisseau principal (11) et le câble d'entraînement (22) du coulisseau de réglage (21) sont couplés l'un à l'autre au moyen d'un élément de couplage d'entraînement (24), qui est configuré sous forme de roue dentée, de telle sorte que le coulisseau principal (11) et le coulisseau de réglage (21) peuvent être déplacés par rapport à un point de référence commun, au moins par sections, à des vitesses de déplacement différentes, et ainsi le réglage d'une distance prédéfinie (D1, D2, D3) entre le coulisseau principal (11) et le coulisseau de réglage (21) par rapport à un axe longitudinal (L) du toit de véhicule (2) et ainsi le réglage d'un angle d'orientation (A) prédéfini de l'agencement d'écran (7) indépendamment de l'état déployé formé de l'agencement d'écran (7).

10. Procédé selon la revendication 9, dans lequel l'entraînement du coulisseau principal (11) et l'entraînement du coulisseau de réglage (21) comprennent :
- la commande d'une première unité d'entraînement, qui est couplée au câble d'entraînement (12) du coulisseau principal (11), et ainsi le déplacement d'au moins un parmi le coulisseau principal (11) et le coulisseau de réglage (21), et
- la commande d'une deuxième unité d'entraînement, qui est couplée au câble d'entraînement (22) du coulisseau de réglage (21), et ainsi le déplacement du coulisseau de réglage (21) par rapport au coulisseau principal (11), de telle sorte que des vitesses de déplacement différentes du coulisseau principal (11) et du coulisseau de réglage (21) sont réglées au moins par sections.

11. Procédé selon la revendication 9 ou 10, dans lequel le réglage d'un angle d'orientation (A) prédéfini de l'agencement d'écran (7) comprend :
- l'entraînement de la roue dentée (24), qui est couplée au coulisseau de réglage (21) ou au coulisseau principal (11) et qui est en prise avec le câble d'entraînement (12) du coulisseau principal (11) et avec le câble d'entraînement (22) du coulisseau de réglage (21).
